# EUROPEAN PATENT SPECIFICATION

(11) **EP 1 101 643 B1**
(45) Date of publication and mention of the grant of the patent: **25.08.2004**
(21) Application number: 01102767.9
(22) Date of filing: 13.01.1998
(51) Int. Cl.: B60K 7/00, B60K 17/04, B60K 17/22

(54) **Low floor drive unit assembly for an electrically driven vehicle**
Antriebseinheit für ein elektrisch angetriebenes Niederflurfahrzeug
Ensemble d'unité de transmission à faible garde au sol pour véhicule éléctrique

(30) Priority: 18.02.1997 US 801531; 18.02.1997 US 801532; 18.02.1997 US 801536
(43) Date of publication of application: 23.05.2001
(62) Divisional of application: 98902488.0
(73) Proprietor: Meritor Heavy Vehicle Systems, LLC, Troy, MI 48084 (US)
(72) Inventor: Ruppert, Malcolm F., Jr., Cotteyville, Kansas 67337 (US); Brill, Lawrence Doyle, Westerville, OH 43081 (US); Sullivan, William Carl, Newark, OH 43055 (US); Swanson, Glen E., Westerville, OH 43082 (US)
(74) Representative: Sties, Jochen, Dipl.-Ing.

(56) References cited:
- EP-A- 0 417 326
- WO-A-97/09192
- FR-A- 2 507 550
- GB-A- 2 176 852
- US-A- 1 543 044
- US-A- 2 589 863
- US-A- 4 270 622
- RIECK G ET AL: "FOCAL POINT: ELECTRIC DRIVE SYSTEMS FOR CITY BUSES" MAN RESEARCH ENGINEERING MANUFACTURING,MAN AKTIENGESELLSCHAFT, MUNCHEN,DE, 1996, pages 4-11, XP000642978

## Description

### BACKGROUND OF THE INVENTION

This invention relates to a vehicle according to the preamble of claim 1.

Mass transit vehicles, such as a bus or trolley car, typically have seats aligned at the lateral sides of the vehicle, with a central aisle extending along the vehicle. The seats are typically at a higher vertical location than the aisle, and thus cover the wheels. It would be desirable to have the aisle positioned relatively low to the ground. This would provide increased passenger space within the body of the vehicle, and may allow the designer to reduce the overall height of the mass transit vehicle. Other advantages to having a lower floor position include improved handicapped access and greater ease in the loading and unloading of passengers.

Mass transit vehicles typically have several axles which support and drive or steer the vehicle. If the axle is a driving axle, then electric motors . can be used to generate torque to drive the wheels. In a typical configuration, a centrally located electric motor drives two opposed wheels at the sides of the vehicle by way of a conventional axle. Usually, transmissions or drive shafts extend from the central motor to the axle.

In the prior art, there are relatively large motor, transmission, or axle elements directly below the center of the vehicle. The aisle is typically in the center of the vehicle and normally goes over the axle, thus requiring the floor of the aisle to be relatively high. One known bus moves the floor up by steps over the axle. It is undesirable, however, to have passengers climb steps to reach the aisle and seating areas.

An example of a prior art drive as mentioned above can be found in US-A-4,270,622.

US-A-1,543,044 discloses a power transmission for motor vehicles. A drive axle comprises two electric motors arranged vertically. Each motor drives an associated wheel via a pinion and a bevel gear independently from the other motor.

DE-A-4112624 shows a vehicle according to the preamble of claim 1. This document shows a drive in which the electric motor for driving the respective wheel is arranged with its axis parallel to the wheel axis. This design allows to use conventional components for brakes, etc. while it is possible to keep the level of the aisle relatively low to the ground.

The invention provides a vehicle having the features of claim 1.

This invention improves packaging and increases passenger compartment size by moving the electric motors to the sides of the vehicle. This allows the interior vehicle floor to be lowered between the motors resulting in improved utilization of the passenger compartment. Also, the flexibility of mounting the electric motors at various angles with respect to the axis of rotation of the first and second driving axles results in flexible packaging designs for other vehicle components. Also, by mounting the electric motors to existing structures on the axle, a weight savings occurs because additional brackets and mounting supports are not required. Finally, by mounting the bevel gear and motor on opposing sides of the axis of rotation, the longitudinal distance through which the motor and its associated gearing extends is minimized so that the floor must only extend upwardly to surround the wheel and the motor for a minimal longitudinal distance.

### BRIEF DESCRIPTION OF THE DRAWINGS

Other advantages of the present invention will be readily appreciated as the same becomes better understood by reference to the following detailed description when considered in connection with the accompanying drawings wherein:
Figure 1 is a cross sectional view of a vehicle incorporating the subject invention;
Figure 2A is a cross sectional view taken along line 2-2 of Figure 1, showing a first electric motor arrangement;
Figure 2B is a view like Figure 2A, but showing an alternative electric motor arrangement;
Figure 3 is a fragmentary view from the inside of the left wheel hub as shown in Figure 2, partially broken away and in cross section, and showing a first embodiment of an electric motor arrangement;
Figure 4 is a cross section view from the front of the left wheel as shown in Figure 3, and showing the first embodiment of an electric motor mounting arrangement;
Figure 5 is a view like Figure 3 but showing an alternative electric motor mounting arrangement;
Figure 6 is a view like Figure 4 but showing the alternative electric motor mounting arrangement;
Figure 7 is a view like Figure 3 but showing an additional electric motor;
Figure 8 is a cross sectional view of a gear box showing an alternative embodiment incorporating a planetary gear set;
Figure 9 is similar to Figure 2A but shows the method of mounting the electric motors to suspension beams;
Figure 10A is a fragmentary view from the inside of the left wheel hub as shown in Figure 9, partially broken away and in cross section, and showing a first embodiment of a flexible coupling;
Figure 10B is a cross-sectional view through the coupling of Figure 10A;
Figure 11 is a view similar to Figure 10A but showing an alternative flexible coupling;
Figure 12 shows an alternative coupling; and
Figure 13 shows details of the mounting of the coupling shown in Figure 12.

### DETAILED DESCRIPTION OF a PREFERRED EMBODIMENT

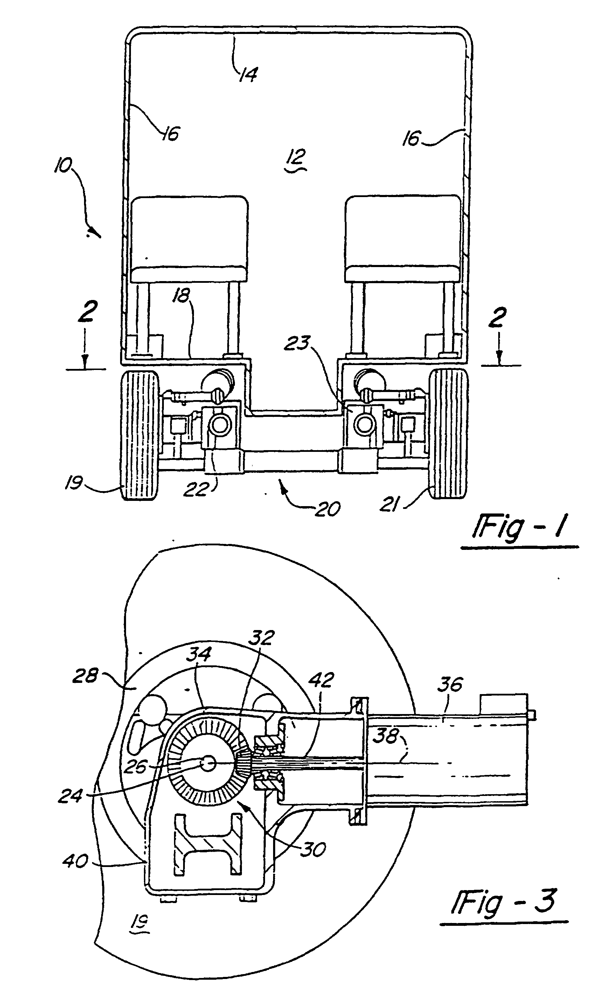

Referring to the Figures, wherein like numerals indicate like or corresponding parts throughout the several views, an automotive vehicle is shown generally at 10. As shown in Figure 1, automotive vehicle 10 includes a passenger compartment 12 defined by a roof 14, two side walls 16, and a vehicle floor 18. A pair of wheels 19, 21 are driven by an automotive vehicle drive unit assembly, generally shown at 20, which has a first unit 22 and a second unit 23. It should be understood that vehicle 10 is typically provided with a pair of drive units and several pairs of wheels.

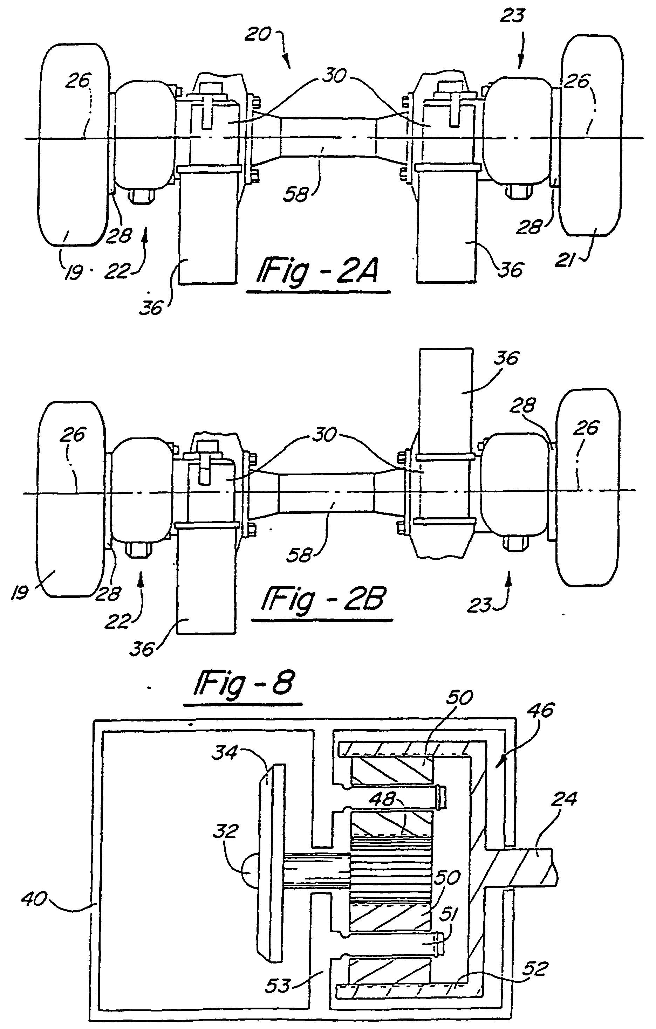

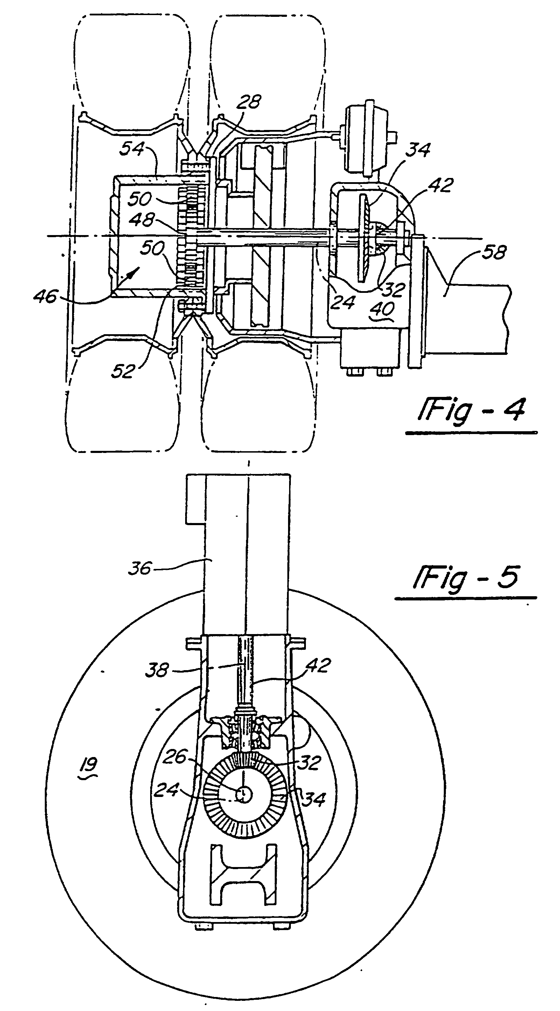

As shown in Figure 2A, the first 22 and second 23 units define an axis of rotation 26. A first driving axle shaft 24, shown in Figure 3, drives a first wheel hub 28 which revolves about the axis 26 of rotation for the first driving axle shaft 24.

A first gear set 30, located adjacent to the first wheel 19, is comprised of a pinion gear 32 and a ring gear 34 which together drive the first wheel hub 28. A first electric motor 36, defining a motor axis of rotation 38, is mounted at a non-parallel angle relative to the axis of rotation 26 of the first driving axle shaft 24. The first electric motor 36 is shown mounted in a horizontal position such that the motor axis of rotation 38 is parallel to the vehicle floor 18 and is perpendicular to the axis of rotation 26 of the first driving axle shaft 24.

As shown in Figure 2A, drive unit assembly 20 further includes a second unit 23 comprising a second driving axle shaft 24, a second wheel hub 28, a second gear set 30, and a second electric motor 36. It is understood that the second unit 23 is a mirror image of the first unit 22. A beam 58 provides a fixed housing extending between the first 22 and second 23 units.

The first 36 and second 36 electric motors can be mounted in various different positions relative to each other. As shown in Figure 2A, the first 36 and second 36 electric motors can be mounted in a generally horizontal position with both electric motors 36 extending forwardly from the beam 58. Where packaging would allow, the electric motors 36 can also be mounted such that they both extend rearwardly from the beam 58. As shown in Figure 2B, the first 36 and second 36 electric motors can be mounted in a generally horizontal position with the first electric motor 36 extending in a forwardly direction relative to beam 58 while the second electric motor 36 extends in a rearwardly direction relative to beam 58. Arranging the configuration so that one electric motor 36 extends forwardly while the other electric motor 36 extends rearwardly can resolve electric motor weight balance issues that arise when both motors extend in the same direction from the beam 58.

As can be seen in Figure 3 and 4, a first gear box 40 houses the first gear set 30 and is rigidly connected to the first electric motor 36. A motor drive shaft 42 extends from the electric motor 36, along the motor axis of rotation 38, and drives the pinion gear 32. The pinion gear 32 meshes with the ring gear 34 which revolves about the axis 26 of the driving axle shaft 24. As the ring gear 34 rotates, it drives the driving axle shaft 24 which turns the wheel hub 28. As can be seen in Figure 4, gear box 40 is fixed to beam 58.

A planetary gear set, shown generally at 46 in Figure 4, can be used to achieve greater overall gear reduction. The planetary gear set 46 can either be located adjacent to the wheel hub 28 or can be incorporated into the gear box 40. The planetary gear set 46 shown in Figure 4 is located adjacent to the first wheel hub 28 and is driven by the first driving axle shaft 24. The planetary gear set 46 shown in Figure 8 is incorporated into the gear box 40. Regardless of its location, the planetary gear set 46 includes a sun gear 48, planet gears 50, and a ring gear hub 52. Each planet gear 50 is attached to a single planetary spider 53 by a corresponding planet pin 51, thus forming a planet gear assembly, as shown in the enlarged view of the planetary gear set 46 in Figure 8. The planet gear assembly is inserted into the ring gear hub 52 such that the teeth of the planet gears 50 mesh with the teeth of the ring gear hub 52.

In a typical configuration there are three planet gears 50 in a planet gear assembly but it is understood that a different number of planet gears 50 can be used. When the planetary gear set 46 is located adjacent to the wheel hub 28, as shown in Figure 4, the sun gear 48 is attached to and driven by the first driving axle shaft 24. As the sun gear 48 rotates, it meshes simultaneously with each of the planet gears 50 in the planet gear assembly. The planet gears 50 mesh with the ring gear hub 52 which results in the turning of the first wheel hub 28. In Figure 4, the entire planetary gear set 46 is shown housed within a planetary hub 54 located adjacent to the first wheel hub 28. It is understood that the drive unit assembly 20 does not require a planetary gear set 46 for operation. The planetary gear set 46 is an optional feature of the drive unit assembly 20.

As shown in Figure 8, the planetary gear set 46 can also be incorporated into the gear box 40 instead of being located adjacent to the wheel hub 28. Incorporating the planetary gear set 46 into the gear box 40 is a unique location for the planetary gear set 46. Typically, this location has been used by a differential which includes a ring gear and a pinion gear which drive axle shafts which in turn drive the wheels. With independent electric motors 36 there is no need for a differential or for any direct mechanical link between opposing wheels. By incorporating the planetary gear set 46 into the gear box 40, the need for a planetary hub 54 is eliminated which decreases the vehicle weight, gives a broader selection of wheel equipment and wheel end features, and reduces overall cost.

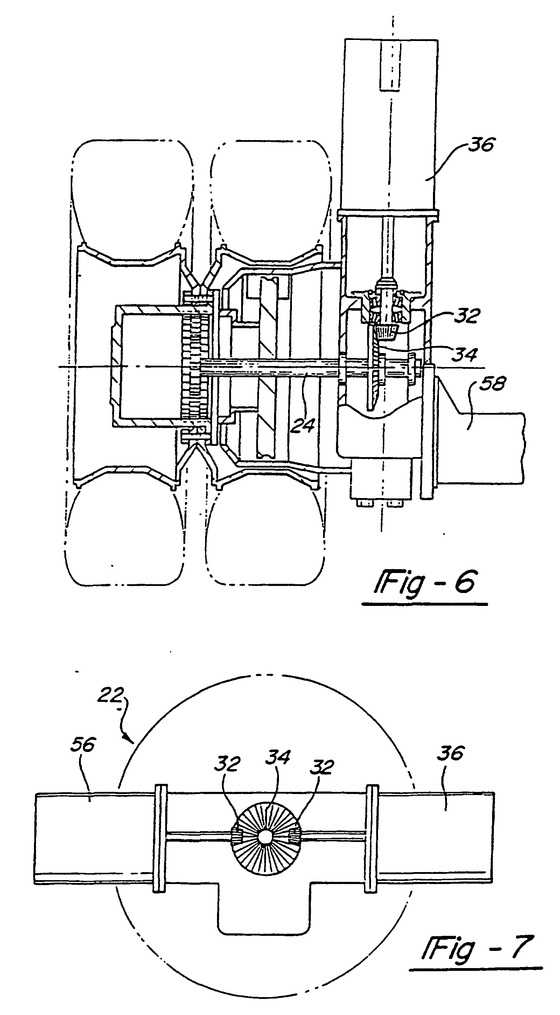

Figure 5 and 6 show an alternate embodiment of the mounting arrangement for the first electric motor 36. The first electric motor 36 is shown mounted in a vertical position such that the motor axis of rotation 38 is perpendicular to the vehicle floor 18 and is perpendicular to the axis of rotation 26 of the first driving axle shaft 24. In a typical configuration, the first electric motor 36 is mounted either in a horizontal or vertical position. However, the electric motor 36 can be mounted at any angle with respect to the vehicle floor 18 and the axis of rotation 26 of the first driving axle shaft 24.

Figure 7 shows an alternate embodiment of the drive unit assembly 20 in which the first unit 22 includes a third electric motor 56, in parallel driving relationship with the first electric motor 36. The third electric motor 56 is also used to drive the first gear set 30. The second unit 23 is a mirror image of the first unit 22 and includes a fourth electric motor 56, in parallel driving relationship with the second electric motor 36. The fourth electric motor 56 is use to drive the second gear set 30. The use of a third 56 and fourth electric motor 56, where packaging space is available, allows smaller gears and motors to be used, thus reducing the necessary size for the system.

With the present invention, the benefits as shown in particular in Figure 1 are achieved. By mounting the motors at the sides of the vehicle, the center of the vehicle floor may be lowered significantly than compared to the prior art. In addition, since the motors themselves are connected to drive the wheels to a non-parallel angle, they do not extend towards the center of the vehicle from the wheel for any undue amount. Thus, the lower floor can begin at a laterally outer position. If the motors extended on an axis parallel to the axis of the wheel, the motor would require a higher floor for more of the lateral width of the vehicle.

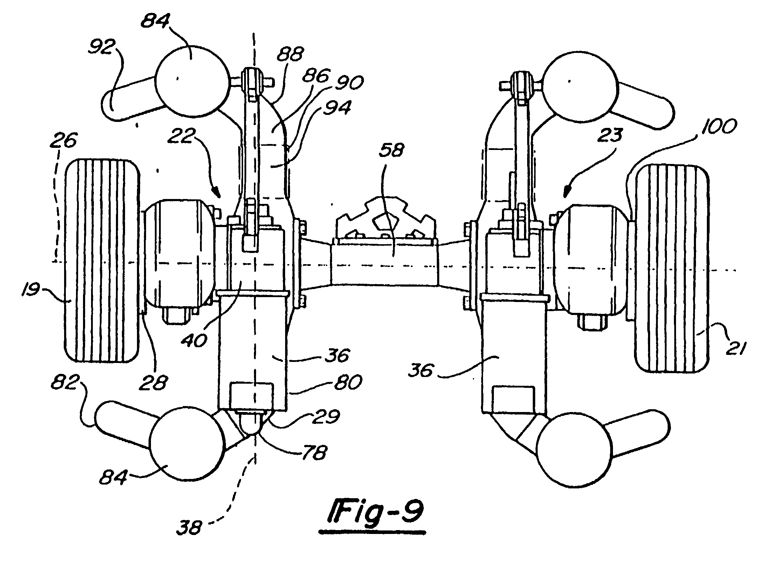

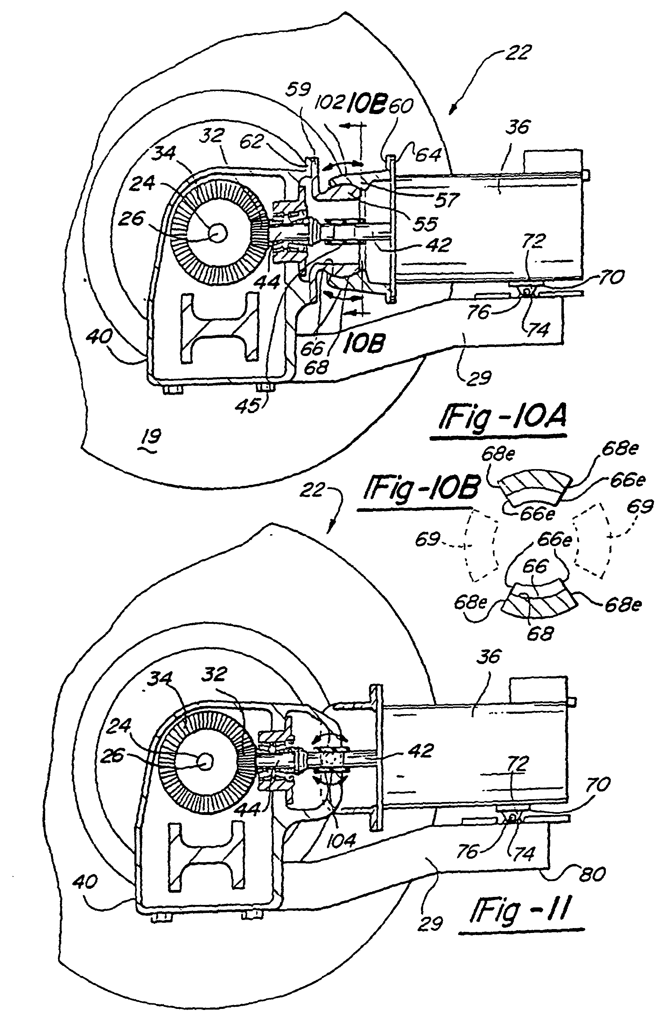

A preferred method of mounting the motors 36 to the vehicle is shown in Figure 9. The first 22 and second 23 vehicle suspension drive unit assemblies drive the wheels 19, 21 about the axis of rotation 26. As shown in Figure 10A, axis 26 is parallel to driving axle shaft 24 for the wheel 19 and extends through the center of the driving axle shaft 24 . The driving axle shaft 24 drives a first wheel hub 28 which revolves about the axis 26 of the driving axle shaft 24.

A first suspension beam 29 extends transversely to the axis 26 of the driving axle shaft 24 and adjacent to the first wheel hub 28. As is known, suspension beams are utilized to interconnect a fixed wheel axle housing and brake assembly to suspension elements such as air springs. The first suspension beam 29 supports the electric motor 36 which generates the torque to drive the driving axle shaft 24. As shown in Figure 9, electric motor 36 defines the motor axis of rotation 38 which is transverse to the axis of rotation 26 of the driving axle shaft 24.

A gear box or gear housing 40 interconnects the electric motor 36 and the driving axle shaft 24 and includes a pinion gear 32 and ring gear 34, shown in Figure 10A. The motor drive shaft 42 extends from the electric motor 36, along the axis 38 defined by the electric motor 36, and is coupled to a coaxial pinion shaft 44 which drives the pinion gear 32. The pinion gear 32 meshes with the ring gear 34 which revolves about the axis 26 of the driving axle shaft 24. As the ring gear 34 rotates, it drives the driving axle shaft 24 which turns the wheel hub 28.

The motor drive shaft 42 is connected to pinion shaft 44 by a flexible coupling. As the vehicle 10 receives road load input, the suspension beam 29 will move and flex. The flexible coupling can include a flexible tube portion 45 made of known materials.

As shown in Figure 10A, the flexible coupling can also be a spherical joint 102. The spherical joint 102 comprises a inner portion 55 and an outer portion 57. The inner portion 55 has an inner flange 59 and the outer portion 57 has an outer flange 60. The inner flange 59 is joined to a gear box flange 62 and the outer flange 60 is joined to an electric motor flange 64. The inner portion 55 of the spherical joint 102 has a concave surface 66 which rotatably mates with a convex surface 68 of the outer portion 57. Therefore, the electric motor 36, attached to the outer portion 57 of the spherical joint 102, can pivot with respect to the gear box 40 which is attached to the inner portion 55 of the spherical joint 102. The center of the spherical joint 102 coincides with the center of the flexible coupling.

As shown in Figure 10B, the inner portion 55 and outer portion 57 of the spherical joint 102 do not extend about 360 degrees about a central axis. Instead, edges such as shown at 66E and 68E are cutoff from each of the members. In this way, the members may be easily assembled. When the inner portion 55 is moved into the outer portion 57, the outer portion 57 is moved to the position shown in phantom at 69. The outer portion is then turned to reach the assembled position such as shown in Figure 10A.

The flexible coupling could alternatively be a universal joint or Oldham joint 104, as shown in Figure 4 as a black box to simplify the overall figure. It should be understood, that known universal joint couplings including two yokes that are driven for rotation with each other, but which may pivot relative to each other about three axes, would be preferably utilized in this embodiment.

For both embodiments, a moveable connection 70 interconnects the electric motor 36 and the first suspension beam 29 at a position spaced apart from the flexible coupling which interconnects the motor drive shaft 42 and the pinion shaft 44. Connection 70 can also be of various forms. A preferred connection 70 includes an electric motor mount 72 and a suspension beam mount 74 that are pivotally connected by a pivot pin 76. As the first suspension beam 29 moves up and down in response to road load input, the axis 38 of the electric motor 36 pivots relative to the first suspension beam 29.

As shown in Figures 9 and 10A, suspension beam 29 forms a C-shaped extension 78 which has a first end 80 and a second end 82. The suspension beam mount 74 that interconnects with the motor mount 72 to form the connection 70 is mounted adjacent end 80 and near the C-shaped extension 78. A second suspension beam 86 extending in the opposite direction from the first suspension beam 29 also forms a C-shaped extension 88 with a first end 90 and a second end 92. A counterweight 94 is disposed near the first end 90 of the second suspension beam 86. The counterweight 94 compensates for weight imbalance resulting from the electric motor 36 being supported by the first suspension beam 29 in a location extending to one side of the axis 26 of the driving axle shaft 24. Without a counterweight 94, the weight imbalance could become evident when vehicle 10 experiences vertical accelerations due to road bumps, rail road tracks, etc. The counterweight 94 can be focused or spread over the length of the second suspension beam 86, and can be cast in place, added later by attaching a weight, or by pouring molten lead into a cavity (not shown) in the second suspension beam 86. Located near the second ends 82, 92 of the C-shaped extensions 78, 88 are circular pads 84 for mounting resilient suspension means (not shown) between the vehicle 10 and the first 29 and second 86 suspension beams. Typically air springs are mounted on pads 84.

The second suspension drive unit assembly, generally shown at 23, consisting of the same or similar components as the first suspension drive unit assembly 22 is interconnected to the first suspension drive unit assembly 22 by the support beam 58. The second suspension drive unit assembly 23 drives a second wheel hub 100, located opposite of the first wheel hub 28 but which also revolves about the axis 26 of the driving axle shaft 24. Packaging advantages exist if the electric motors 36 of the first 22 and second 23 suspension drive unit assemblies extend in the same direction from the support beam 58.

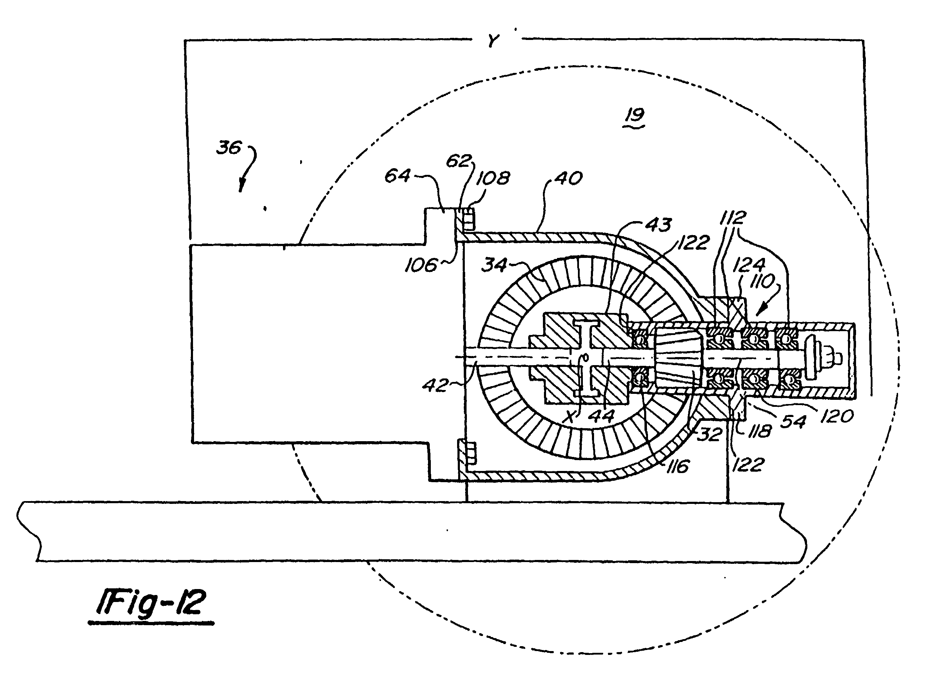

Another mounting method is shown in Figure 12. The motor 36 for driving wheel 19 is connected to the gear box or housing 40. The gear housing 40 may be a portion of the axle housing for the wheel 19. The ring gear or bevel gear 34 is shown for driving wheel 19. Ring gear 34 is preferably associated with appropriate gearing to drive wheel 19.

As shown, the gear housing 40 includes an open end 106. Open end 106 is closed by the attachment of motor 36. As shown, bolts 108 attach the gear housing flange 62 to the electric motor flange 64. Also, the drive pinion gear 32 engages and drives the ring gear 34. The pinion shaft 44 for the pinion gear 32 receives drive rotation from the motor output shaft 42. The shafts 42, 44 are interconnected by a flexible coupling 43.

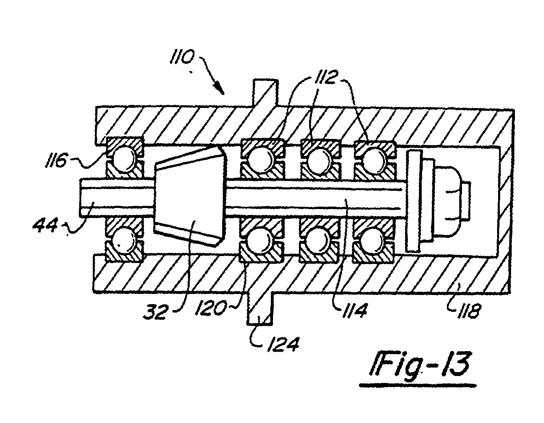

As shown, the gear housing 40 incorporates an opposed mounting portion 110 at a side of a central drive axis X of rotation opposed from the mounting of the motor 36. As shown in greater detail in Figure 13, the mounting portion 110 includes a first bearing assembly 112 which mounts a shaft portion 114 for the pinion gear 32 and a second bearing assembly 116 which mounts the pinion shaft 44 for the pinion gear 32. It should be understood that the first 112 and second 116 bearing assemblies include at least one bearing, but a greater number of bearings can also be used. As shown in Figures 12 and 13, the first bearing assembly 112 includes three angular contact bearings and the second bearing assembly 116 includes a single bearing. It is necessary for pinion gear 32 to be adequately supported on bearings such that it is able to transmit sufficient torque to rotate wheel 19.

In this embodiment, the positioning of bearings on an opposed side of the axis X from motor 36 results in a smaller overall envelope required for the entire system shown in Figure 12. As shown, the bearings 112 are mounted in a bearing housing 118 having bearing support portions 120. Bearing housing 118 encloses an open end 122 of gear housing 40.

In order to assemble the opposed mounting portion 110 into the gear housing 40, the bearing housing 118 is inserted into the open end 122 of gear housing 40 such that the pinion gear 32 teeth and the ring gear 34 teeth do not mesh. After initial positioning of the opposed mounting portion 110, the bearing housing 118 is moved horizontally such that a flange portion 124 of the bearing housing 118 encloses the open end 122 of the gear housing 40 resulting in the meshing of pinion gear 32 teeth with ring gear 34 teeth.

With this embodiment, the electric motor 36 is mounted on one side of the gear housing 40, and drives the pinion gear 32, which is mounted on one side of the axis X. The positioning of the bearings 112 on the opposed side of the axis X from the motor 36 results in an envelope Y which does not extend far beyond the size required for wheel 19. The floor 18 of the vehicle 10 must rise to accommodate wheel 19, and must also extend longitudinally slightly forwardly and rearwardly from the wheel 19. Thus, by the positioning of a good deal of the bearings, etc., for the gears and motors 36 withing the longitudinal envelope of the wheel 19, this embodiment does not require the floor 8 to move upwardly to cover the motor 36 and gearing by any significant longitudinal amount.

It should also be understood that s similar coupling is mounted at the opposed lateral side of the vehicle 10 and would drive its own wheel 21.

The invention has been described in an illustrative manner, and it is to be understood that the terminology which has been used is intended to be in the nature of words of description rather than of limitation.

Obviously, many modifications and variations of the present invention are possible in light of the above teachings. It is, therefore, to be understood that reference numerals are merely for convenience and are not to be in any way limiting, and that the invention may be practiced otherwise than as specifically described, provided that such variations do not depart from the scope of the appended claims.

## Claims

1. A vehicle comprising:
a vehicle body extending between lateral sides (16), passenger seats being mounted adjacent each of said lateral sides (16), a floor (18) defined beneath said passenger seats, an aisle defined between said passenger seats, and said floor (18) also extending beneath said aisle;
at least one driving axle for driving a pair of laterally spaced wheels (19, 21) including a first drive axle shaft (24) associated with the first of said wheels (19), and a second drive axle shaft (24) associated with the second of said wheels (21), said first and second drive axle shafts (24) defining an axis of rotation (26);
a first and second gear set (30) for driving said first and second wheels (19, 21);
a first electric motor (36) for driving said first gear set (30), and a second electric motor (36) operatively connected to drive said second gear set (30); and
said electric motors (36) being mounted at a vertical position which is higher than a vertical position of the floor (18) of said aisle;
**characterized in that** said first electric motor (36) is mounted at a non-parallel angle relative to said axis of rotation (26) of said first drive axle shaft (24), and said second electric motor (36) is mounted at a non-parallel angle relative to said axis of rotation (26) of said second drive axle shaft (24).

2. A vehicle as set forth in Claim 1, including a third electric motor (56) mounted in parallel driving relationship with said first electric motor (36) to assist in driving said first gear set (30) and a fourth electric motor (56) mounted in parallel driving relationship with said second electric motor (36) to assist in driving said second gear set (30).

3. A vehicle as set forth in Claim 2, including a first planetary gear set (46) driven by said first (36) and third (56) electric motors via said first gear set (30) for speed reduction at said first wheel (19) and a second planetary gear set (46) driven by said second (36) and fourth (56) electric motors via said second gear set (30) for speed reduction at said second wheel (21).

4. A vehicle as set forth in Claim 1, including a first planetary gear set (46) driven by said first gear set (30) and a second planetary gear set (46) driven by said second gear set (30) for reducing speed at said first and second wheels (19, 21).

5. A vehicle as set forth in Claim 4, including a first gearbox (40) for housing said first gear set (30) and a second gearbox (40) for housing said second gear set (30), said first and second gearboxes (40) being mounted to said first and second electric motors (36) respectively and wherein said first and second planetary gear sets (46) are incorporated into first and second gearboxes (40).

6. A vehicle as set forth in Claim 4, wherein said first gear set (30) includes a first pinion gear (32) in driving engagement with a first ring gear (34) mounted for rotation with said'first wheel (19) and said second gear (30) set includes a second pinion gear (32) in driving engagement with a second ring gear (34) mounted for rotation with said second wheel (21).

7. A vehicle as set forth in Claim 6, wherein said first planetary gear set (46) includes a first sun gear (48) mounted for rotation with said first ring gear (34) and a first plurality of planet gears (50) in meshing engagement with a first planetary ring gear hub (52) and said second planetary gear set (46) includes a second sun gear (48) mounted for rotation with said second ring gear (34) and a second plurality of planet gears (50) in meshing engagement with a second planetary ring gear hub (52).

8. A vehicle as set forth in Claim 7, wherein said first planetary ring gear hub (52) drives said first wheel (19) and said second planetary ring gear hub (52) drives said second wheel (21).

9. A vehicle as set forth in Claim 7, wherein said first planetary ring gear hub (52) drives said first driving axle shaft (24) and said second planetary ring gear hub (52) drives said second driving axle shaft (24).

10. A vehicle as set forth in Claim 1, including a third electric motor (56) in parallel driving relationship with said first electric motor (36) to drive said first gear set (30) and a fourth electric motor (56) in parallel driving relationship with said second electric motor (36) to drive said second gear set (30) wherein said first (36) and third (56) electric motors drive said first gear set (30) and said second (36) and fourth (56) electric motors drive said second gear set (30) independently from each other wherein said first (36) and said third (56) electric motors extend radially from said first gear set (30), and said second (36) and said fourth (56) electric motors extend radially from said second gear set (30).

11. A vehicle as set forth in Claim 10, wherein said first gear set (30) includes a first pinion gear (32) driven by said first electric motor (36) and a second pinion gear (32) driven by said third electric motor (56), said first and second pinion gears (32) for simultaneously driving a first ring gear (34) and wherein said second gear set (30) includes a third pinion gear (32) driven by said second electric motor (36) and a fourth pinion gear (32) driven by said fourth electric motor (56), said third and fourth pinion gears (32) for simultaneously driving a second ring gear (34).

## Patentansprüche

1. Fahrzeug mit:
einer sich zwischen Längsseiten (16) erstreckenden Fahrzeugkarosserie, an jeder Längsseite (16) angebrachten Fahrgastsitzen, einem unter den Fahrgastsitzen gebildeten Boden (18), einem zwischen den Fahrgastsitzen gebildeten Gang, wobei sich der Boden (18) auch unter dem Gang erstreckt;
mindestens einer Antriebsachse zum Antrieb von zwei seitlich voneinander beabstandeten Rädern (19, 21) mit einer ersten Antriebsachswelle (24), die zu dem ersten der Räder (19) gehört, und einer zweiten Antriebsachswelle (24), die zu dem zweiten der Räder (21) gehört, wobei die erste und die zweite Antriebsachswelle (24) eine Drehachse (26) bilden;
einem ersten und einem zweiten Zahnradsatz (30) zum Antrieb des ersten und des zweiten Rades (19, 21);
einem ersten Elektromotor (36) zum Antrieb des ersten Zahnradsatzes (30) und einem zweiten Elektromotor (36), der funktionsmäßig verbunden ist, um den zweiten Zahnradsatz (30) anzutreiben; und
wobei die Elektromotoren (36) in einer vertikalen Lage angebracht sind, die höher ist als eine vertikale Lage des Bodens (18) des Gangs;
**dadurch gekennzeichnet, dass** der erste Elektromotor (36) in einem nichtparallelen Winkel relativ zur Drehachse (26) der ersten Antriebsachswelle (24) angebracht ist und der zweite Elektromotor (36) in einem nichtparallelen Winkel relativ zur Drehachse (26) der zweiten Antriebsachswelle (24) angebracht ist.

2. Fahrzeug nach Anspruch 1 mit einem dritten Elektromotor (56), der in paralleler Antriebsbeziehung zu dem ersten Elektromotor (36) angebracht ist, um den Antrieb des ersten Zahnradsatzes (30) zu unterstützen, und einem vierten Elektromotor (56), der in paralleler Antriebsbeziehung zu dem zweiten Elektromotor (36) angebracht ist, um den Antrieb des zweiten Zahnradsatzes (30) zu unterstützen.

3. Fahrzeug nach Anspruch 2 mit einem ersten Planetenradsatz (46), der zur Drehzahlreduzierung an dem ersten Rad (19) durch den ersten (36) und den dritten (56) Elektromotor über den ersten Zahnradsatz (30) angetrieben wird, und einem zweiten Planetenradsatz (46), der zur Drehzahlreduzierung an dem zweiten Rad (21) durch den zweiten (36) und den vierten (56) Elektromotor über den zweiten Zahnradsatz (30) angetrieben wird.

4. Fahrzeug nach Anspruch 1 mit einem ersten Planetenradsatz (46), der durch den ersten Zahnradsatz (30) angetrieben wird, und einem zweiten Planetenradsatz (46), der durch den zweiten Zahnradsatz (30) angetrieben wird, um die Drehzahl an dem ersten und dem zweiten Rad (19, 21) zu reduzieren.

5. Fahrzeug nach Anspruch 4 mit einem ersten Zahnradkasten (40) zur Aufnahme des ersten Zahnradsatzes (30) und einem zweiten Zahnradkasten (40) zur Aufnahme des zweiten Zahnradsatzes (30), wobei der erste und der zweite Zahnradkasten (40) an dem ersten bzw. zweiten Elektromotor (36) angebracht sind, und wobei der erste und der zweite Planetenradsatz (46) in den ersten und den zweiten Zahnradkasten (40) eingebaut sind.

6. Fahrzeug nach Anspruch 4, wobei der erste Zahnradsatz (30) ein erstes Ritzel (32) umfasst, das mit einem zur Drehung mit dem ersten Rad (19) angebrachten ersten Hohlrad (34) in Antriebseingriff steht, und wobei der zweite Zahnradsatz (30) ein zweites Ritzel (32) umfasst, das mit einem zur Drehung mit dem zweiten Rad (21) angebrachten zweiten Hohlrad (34) in Antriebseingriff steht.

7. Fahrzeug nach Anspruch 6, wobei der erste Planetenradsatz (46) ein zur Drehung mit dem ersten Hohlrad (34) angebrachtes erstes Sonnenrad (48) und eine erste Vielzahl von Planetenrädern (50) umfasst, die mit einer ersten Planetenhohlradnabe (52) in Eingriff stehen, und wobei der zweite Planetenradsatz (46) ein zur Drehung mit dem zweiten Hohlrad (34) angebrachtes zweites Sonnenrad (48) und eine zweite Vielzahl von Planetenrädern (50) umfasst, die mit einer zweiten Planetenhohlradnabe (52) in Eingriff stehen.

8. Fahrzeug nach Anspruch 7, wobei die erste Planetenhohlradnabe (52) das erste Rad (19) antreibt und die zweite Planetenhohlradnabe (52) das zweite Rad (21) antreibt.

9. Fahrzeug nach Anspruch 7, wobei die erste Planetenhohlradnabe (52) die erste Antriebsachswelle (24) antreibt und die zweite Planetenhohlradnabe (52) die zweite Antriebsachswelle (24) antreibt.

10. Fahrzeug nach Anspruch 1 mit einem dritten Elektromotor (56), der mit dem ersten Elektromotor (36) in paralleler Antriebsbeziehung steht, um den ersten Zahnradsatz (30) anzutreiben, und einem vierten Elektromotor (56), der mit dem zweiten Elektromotor (36) in paralleler Antriebsbeziehung steht, um den zweiten Zahnradsatz (30) anzutreiben, wobei der erste (36) und der dritte (56) Elektromotor den ersten Zahnradsatz (30) und der zweite (36) und der vierte (56) Elektromotor den zweiten Zahnradsatz (30) unabhängig voneinander antreiben, wobei der erste (36) und der dritte (56) Elektromotor sich radial von dem ersten Zahnradsatz (30) erstrecken und der zweite (36) und der vierte (56) Elektromotor sich radial von dem zweiten Zahnradsatz (30) erstrecken.

11. Fahrzeug nach Anspruch 10, wobei der erste Zahnradsatz (30) ein von dem ersten Elektromotor (36) angetriebenes erstes Ritzel (32) und ein von dem dritten Elektromotor (56) angetriebenes zweites Ritzel (32) umfasst, wobei das erste und das zweite Ritzel (32) dazu dienen, ein erstes Hohlrad (34) gleichzeitig anzutreiben, und wobei der zweite Zahnradsatz (30) ein von dem zweiten Elektromotor (36) angetriebenes drittes Ritzel (32) und ein von dem vierten Elektromotor (56) angetriebenes viertes Ritzel (32) umfasst, wobei das dritte und das vierte Ritzel (32) dazu dienen, ein zweites Hohlrad (34) gleichzeitig anzutreiben.

## Revendications

1. Un véhicule comprenant :
- une caisse de véhicule s'étendant entre des faces latérales (16), des sièges de passager étant montés adjacents à chacune des faces latérales (16), un plancher (18) défini en dessous desdits sièges de passagers, un passage central défini entre lesdits sièges de passagers et ledit plancher (18) s'étendant également en dessous dudit passage central ;
- au moins un essieu moteur pour entraîner une paire de roues (19, 21) latéralement espacées incluant un premier arbre (24) d'entraînement associé à la première (19) desdites roues, et un deuxième arbre (24) d'entraînement associé à la deuxième (21) desdites roues, lesdits premier et deuxième arbres (24) d'entraînement définissant un axe de rotation (26) ;
- un premier et un deuxième engrenages (30) pour entraîner lesdites première et deuxième roues (19, 21) ;
- un premier moteur électrique (36) pour entraîner ledit premier engrenage (30) et un deuxième moteur électrique (36) relié fonctionnellement pour entraîner ledit deuxième engrenage (30) ; et
- lesdits moteurs électriques (36) étant montés dans une position verticale qui est plus élevée que la position verticale du plancher (18) dudit passage central ;
**caractérisé en ce que** ledit premier moteur électrique (36) est monté dans une position non parallèle et faisant un angle par rapport audit axe de rotation (26) dudit premier arbre (24) d'entraînement, et ledit deuxième moteur électrique (36) est monté dans une position non parallèle et faisant un angle par rapport audit axe de rotation (26) dudit deuxième arbre (24) d'entraînement.

2. Un véhicule selon la revendication 1, comprenant un troisième moteur électrique (56) monté en relation d'entraînement parallèle avec ledit premier moteur électrique (36) pour aider à l'entraînement dudit premier engrenage (30) et un quatrième moteur électrique (56) monté en relation d'entraînement parallèle avec ledit deuxième moteur électrique (36) pour aider à l'entraînement dudit deuxième engrenage (30).

3. Un véhicule selon la revendication 2, comprenant un premier train d'engrenages planétaire ou épicycloïdal (46) entraîné par lesdits premier (36) et troisième (56) moteurs électriques via ledit premier engrenage (30), pour la réduction de vitesse sur ladite première roue (19) et un deuxième train d'engrenages planétaire
ou épicycloïdal (46) entraînés par lesdits deuxième (36) et quatrième (56) moteurs électriques via ledit deuxième engrenage (30) pour la réduction de vitesse sur ladite deuxième roue (21).

4. Un véhicule selon la revendication 1, comprenant un premier train d'engrenages planétaire ou épicycloïdal (46) entraîné par ledit premier engrenage (30) et un deuxième train d'engrenages planétaire ou épicycloïdal (46) entraîné par ledit deuxième engrenage (30) pour réduire la vitesse sur lesdites première et deuxième roues (19, 21).

5. Un véhicule selon la revendication 4, comprenant un premier carter d'engrenages (40) pour loger ledit premier engrenage (30) et un deuxième carter d'engrenages (40) pour loger ledit deuxième engrenage (30), lesdits premier et deuxième carters d'engrenages (40) étant montés respectivement sur lesdits premier et deuxième moteurs électriques (36), et dans lequel lesdits premier et deuxième trains d'engrenages planétaires (46) sont incorporés dans les premier et deuxième carters d'engrenages (40).

6. Un véhicule selon la revendication 4, dans lequel ledit premier engrenage (30) comprend un premier pignon (32) engrené avec une première couronne dentée (34) montée pour tourner avec ladite première roue (19) et ledit deuxième engrenage (30) comprend un deuxième pignon (32) engrené avec une deuxième couronne dentée (34) montée pour tourner avec ladite deuxième roue (21).

7. Un véhicule selon la revendication 6, dans lequel ledit premier train d'engrenages planétaire ou épicycloïdal (46) comprend une première roue d'engrenage planétaire (48) montée pour tourner avec ladite première couronne dentée (34) et une première pluralité de roues d'engrenage satellites (50) engrenées avec un premier moyeu à couronne dentée planétaire (48) et ledit deuxième train d'engrenage planétaire (46) comprend une deuxième roue d'engrenage planétaire (48) montée pour tourner avec ladite deuxième couronne dentée (34) et une deuxième pluralité de roues d'engrenage satellites (50) engrenées avec un deuxième moyeu à couronne dentée planétaire (52).

8. Un véhicule selon la revendication 7, dans lequel un premier moyeu à couronne dentée planétaire (52) entraîne ladite première roue (19) et ledit deuxième moyeu à couronne dentée planétaire (52) entraîne ladite deuxième roue (21).

9. Un véhicule selon la revendication 7, dans lequel ledit premier moyeu à couronne dentée planétaire (52) entraîne ledit premier arbre (24) d'entraînement et ledit deuxième moyeu à couronne dentée planétaire (52) entraîne ledit deuxième arbre (24) d'entraînement.

10. Un véhicule selon la revendication 1, comprenant un troisième moteur électrique (56) en relation d'entraînement parallèle avec ledit premier moteur électrique (36) pour entraîner ledit premier engrenage (30) et un quatrième moteur électrique (56) en relation d'entraînement parallèle avec ledit deuxième moteur électrique (36) pour entraîner ledit deuxième engrenage (30), dans lequel lesdits premier (36) et troisième (56) moteurs électriques entraînent ledit premier engrenage et lesdits deuxième (36) et quatrième (56) moteurs électriques entraînent ledit deuxième engrenage (30) indépendamment l'un de l'autre, et dans lequel lesdits premier (36) et troisième (56) moteurs électriques s'étendent radialement à partir dudit premier engrenage et lesdits deuxième (36) et quatrième (56) moteurs électriques s'étendent radialement à partir dudit deuxième engrenage (30).

11. Un véhicule selon la revendication 10, dans lequel ledit premier engrenage (30) comprend un premier pignon d'engrenage (32) entraîné par ledit premier moteur électrique (36) et un deuxième pignon d'engrenage (32) entraîné par ledit troisième moteur électrique (56), lesdits premier et deuxième pignons d'engrenage (32) pour entraîner simultanément une première couronne dentée (34) et dans lequel ledit deuxième engrenage (30) comprend un troisième pignon d'engrenage (32) entraîné par ledit deuxième moteur électrique (36) et un quatrième pignon d'engrenage (32) entraîné par ledit quatrième moteur électrique (56), lesdits troisième et quatrième pignons d'engrenage (32) pour entraîner simultanément une deuxième couronne dentée (34).
